# EUROPÄISCHE PATENTANMELDUNG

(11) **EP 0 577 954 A1**
(43) Veröffentlichungstag der Anmeldung: **12.01.1994**
(21) Anmeldenummer: 93107774.7
(22) Anmeldetag: 13.05.1993
(51) Int. Cl.: B60B 33/00

(54) **Laufrad, insbesondere für Rollen**

(30) Priorität: 23.06.1992 DE 4220461
(71) Anmelder: Albert Schulte Söhne GmbH. & Co., D-42908 Wermelskirchen (DE)
(72) Erfinder: Lange, Hans-Willi, Dipl.-Ing., W-5632 Wermelskirchen 1 (DE)
(74) Vertreter: Mentzel, Norbert, Dipl.-Phys.

(57) **Zusammenfassung**

Das Laufrad weist einen Felgenkörper (10) aus spritzgußfähigem Kunststoff auf, auf den eine Bereifung aus thermoplastischem Elastomer aufgebracht ist.

Um neben einer hohen Hitze-und Flammbeständigkeit sowie einem guten Zusammenhalteffekt zwischen dem Felgenkörper (10) und der Bereifung (11) bei hoher mechanischer Belastbarkeit, Formstabilität und kostengünstige Herstellung erzielen zu können, ist als Werkstoff des Felgenkörpers ein Polypropylen-Homopolymer und als Werkstoff der Bereifung Styrol-Ethylen-Buthadien-Styrol eingesetzt.

## Beschreibung

Die Erfindung betrifft ein Laufrad, insbesondere für Rollen, das einen Felgenkörper aus spritzgußfähigem Kunststoff aufweist, auf den eine Bereifung aus thermoplastischem Elastomer aufgebracht ist.

Derartige Kunststoff-Elastomerverbunde werden in der Technik bei Bauteilen verschiedenster Anwendungsgebiete eingesetzt. Bei derartigen Bauteilen, die aus fest miteinander verbundenen thermoplastischen und elastomeren Komponenten bestehen, wird der Verbund weder durch mechanische Verkrallungen oder Verbindungselemente noch durch Kleber oder Haftvermittler erzielt. Kunststoff-Elastomerverbunde erhält man durch ein-oder zweistufigen Spritzguß, Pressen oder Coextrusion mit nachfolgender Covulkanisation.

Es ist auch bekannt, derartige Verbunde für Laufräder von insbesondere Rollen einzusetzen, die sich durch einen guten Verbund der beiden Laufrad bildenden Komponenten wie Felgenkörper und Bereifung auszeichnen. Dabei wird bei einer besonderen, aus der DE 37 32 505 C2 bekannten Ausführungsform für den Felgenkörper ein halogenfreies Polypropylen-Copolymer und für die Bereifung ein Polypropylen, vernetzt vulkanisiert mit einem EPDM-Kautschuk eingesetzt. Das für den Felgenkörper verwendete Polypropylen-Copolymer wird im Handel unter der Bezeichnung "Polyflam Ripp 395 N D" geführt, während ein bekanntes Material für die Bereifung im Handel unter der Bezeichnung "Santoprene ( 251-80)" erhältlich ist. Obschon diese Werkstoffkombination sich durch eine beträchtliche Hitze- und Flammenbeständigkeit auszeichnet und auch ein genügender Zusammenhalt zwischen den beiden Werkstoffkomponenten gegeben ist, so läßt doch insbesondere der Werkstoff des Felgenkörpers noch bestimmte Wünsche im Hinblick auf die Wärmeformbeständigkeit, die Härte-und Verschleißfestigkeit, den E-Modul, den Schmelzindex sowie die Kriechneigung offen. Auch die Compoundierbarkeit sowie die mechanischen Eigenschaften des bei der vorbekannten Lösung verwendeten Werkstoffes für die Bereifung sind nicht optimal, so daß auch bei diesem ausgewählten Werkstoff bei der bekannten Ausführungsform noch Anfoderungen offen bleiben.

Die Aufgabe der vorliegenden Erfindung ist es eine Werkstoffkombination beider Laufrad bildender Komponenten auszuwählen, bei der zwar auch die Vorteile hinsichtlich einer Hitze-und Flammbeständigkeit sowie eines innigen Verbundes beider Komponenten gewährleistet bleiben, jedoch außerdem eine hohe Wärmeformbeständigkeit, eine hohe Härte-und Verschleißfestigkeit, ein hoher Elastizitätsmodul, ein geringer Schmelzindex und eine geringe Kriechneigung beim Werkstoff des Felgenkörpers vorhanden sind, während der die Bereifung bildende Werkstoff sich durch gute Compoundierbarkeit und gute mechanische Eigenschaften sowie Recyclingfähigkeit auszeichnen soll.

Diese Aufgabe ist erfindungsgemäß daruch gelöst, daß als Werkstoff des Felgenkörpers ein Polyproppylen-Homopolymer und als Werkstoff der Bereifung SEBS (Styrol-Ethylen-Buthadien-Styrol) eingesetzt ist. Der Werkstoff Polypropylen-Homopolymer ist unter dem Handelsnamen "Arcoplen" bekannt, während das Thermoplast-Elastomer SEBS im Handel unter dem Namen "PTS-Thermoflex" erhältlich ist. Abgesehen davon, daß der Werkstoff Polypropylen-Homopoylmer eine gute Wärmeformbeständigkeit, eine hohe Härte-und Verschleißfestigkeit, einen gegenüber vergleichbaren Werkstoffen hohen Elastizitätsmodul und einen im Hinblick auf den Energieverbrauch bei der Herstellung geringen Schmelzindex und eine für die Formbeständigkeit unter Last verantwortliche geringe Kriechneigung aufweist, zeichnen sich Acropolen-Compounds durch ihre Recyclefähigkeit aus. In Verbindung mit PTS-Thermoflex (Thermoplast-Elastomer, 23 - 95 Shore A) lassen sich Hart-Weich-Verbindungen ohne Formschluß herstellen, wobei das Einlegeverfahren ebenso geeignet ist wie der Zweikomponenten-Spritzguß. Dabei liegt die Verarbeitungstemperatur im Bereich von 190° - 210° Grad Celsius, wobei die Formtemperatur zweckmäßigerweise etwa 40° - 60° Grad Celsius beträgt.

Obschon die Hart-Weich-Verbindung zwischen dem Polypropylen-Homopolymer und dem SEBS ohne Formschluß hergestellt werden kann, um einen sicheren Verbund zwischen den beiden Werkstoffkomponenten zu erzielen, läßt sich vorteilhaft die Umfangsfläche des Felgenkörpers profiliert ausbilden. Dabei kann die Profilierung vorteilhaft durch einem im Querschnitt schwalbenschwanzförmigen, umlaufenden Vorsprung gebildet sein, dessen Randbereiche abwechselnd Ausnehmungen aufweisen, die vom Bereifungwerkstoff ausgefüllt sind.

Die Hart-Weich-Verbindungen aus Acroplen und PTS-Thermoflex lassen sich im Recyclefall sehr gut wiederverarbeiten, da sich beide Komponenten in beliebigen Verhältnissen mischen lassen.

Ein Ausführungsbeispiel des Erfindungsgegenstandes ist in der Zeichnung dargestellt und wird nachfolgend näher erläutert. Es zeigen:
- Fig. 1: das Laufrad in einem vertikal Schnitt,
- Fig. 2: das aus Fig. 1 ersichtliche Laufrad in einer Seitenansicht.

Das aus der Zeichnung ersichtliche Laufrad besteht aus einem Felgenkörper 10 und einer darauf aufgespritzen Bereifung 11. Im Zentrum des Felgenkörpers 10 befindet sich die beispielsweise einen Lagerkörper 13 einschließende Nabe 12, aus deren Außenumfang ein scheibenförmiger Steg 14 austritt, der eine Verbindung zwischen der Nabe 12 und der diese mit radialem Abstand umrundenden Felge 15 herstellt. Statt des als Gleitlager ausgebildeten Lagerkörpers 13 könnte sich in der Nabe 12 auch ein Walzlager befinden. Allerdings ist es auch möglich die Nabe 12 innenseitig glattwandig zu gestalten und diese unmittelbar auf einem nicht dargestellten Achszapfen zu lagern.

Während die äußere Mantelfläche der Bereifung 11 leicht nach außen gewölbt ist, sind die Stirnflächen 16 der Bereifung 11 bündig zu den Stirnflächen der Felge 15 angeordnet. Bei dem dargestellten Laufrad sind die Übergänge des Außenmantels der Bereifung 11 in dessen Stirnflächen 16 abgerundet.

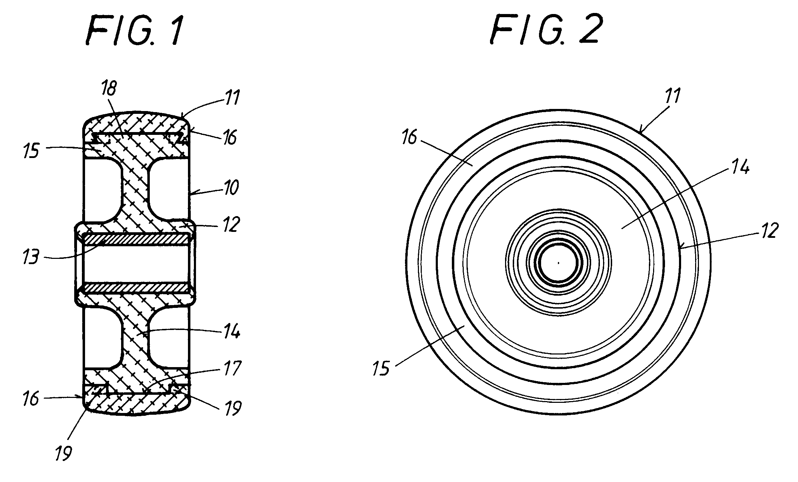

Wie aus Fig. 1 der Zeichnung weiterhin zu entnehmen ist, läßt sich die axiale Lage des Lagerkörpers 13 in der Nabe 12 durch bereichsweises Umgreifen der Stirnflächen des Lagerkörpers 13 durch den Werkstoff der Nabe 12 sichern. Der Felgenkörper besteht aus einem vorzugsweise halogenfreien Polypropylen-Homopolymer, das unter dem Handelsnamen Arcoplen-SE/0 HF bekannt ist und die nachfolgend genannten Eigenschaften aufweist.

| | | | |
|---|---|---|---|
| Spezifisches Gewicht | g/cm³ | DIN-53479 | 1,03 |
| Schmelzindex (230 °C 2,16 kg) | gr/10 Min. | ASTM D1238 | 6-10 |
| Zugfestigkeit | N/mm² | DIN 53455 | 27 |
| E-Modul | N/mm² | DIN 53457 | 2100 |
| Bruchdehnung | % | DIN 53455 | 50 |
| IZOD Kerbschlagzähigkeit 6,4 mm | J/m | ASTM D256 | 25 |
| HDT, Wärmeformbeständigkeit 1,82 N/mm² | ° C | DIN 53461 | 60 |
| VICAT Erweichungspunkt 49 N | ° C | ASTM D1525 | 99 |
| Lineare Wärmeausdehnung | 1/° C | VDE 0304/1 | 85EX-4 |
| Durchschlagfestigkeit 3 mm | kV/mm | ASTM D149 | 20 |
| Durchgangswiderstand | Ohm x cm | ASTM D257 | 1EX+17 |
| Kriechstromfestigkeit KB Lösung A | V | DIN 53480 | >400 |
| Kriechstromfestigkeit KC Lösung F | V | DIN 53480 | >600 |
| Entflammbarkeit 3,2 mm | | UL 94 | VO |
| Entflammbarkeit 6,4 mm | | UL 94 | VO |

Die Bereifung 11 besteht aus einem Thermoplast-Elastomer das als Styrol-Ethylen-Buthadien-Styrol (SEBS) unter dem Handelsnamen "PTS-Thermoflex 78/FR-V2, 800 Natur" bekannt ist. Die Verbindung des PTS-Thermoflex mit Acroplen läßt sich sowohl durch das Einlegeverfahren als auch durch das 2-Komponenten-Spritzgußverfahren herstellen. Dabei ist eine Verarbeitungstemperatur von 190° - 210° Celsius für den Kunststoff und eine Formtemperatur von 40° - 60° Celsius angezeigt. Für die Oberflächen ist ein vortrocknen über etwa 2 Stunden bei 80° empfehlenswert.

Obschon sowohl der Außenmantel des Felgenkörpers 10 als auch der Innenmantel der Bereifung 11 glattwandig sein können, so ist es doch vorteilhaft, die Umfangsfläche 17 des Felgenkörpers 10 profiliert auszubilden. Dabei mag die Profilierung als im Querschnitt schwalbenschwanz förmiger, umlaufender Vorsprung 18 gestaltet sein, dessen Randbereiche abwechselnd mit Ausnehmungen 19 versehen sind, die vom Werkstoff der Bereifung 11 im Verbindungszustand ausgefüllt sind.

Dabei ist die Formgestaltung im Verbundbereich zwischen der Bereifung 11 und dem Felgenkörper 10 nicht an die vorgeschriebene Ausführungsform gebunden, sondern kann in manigfaltiger Weise abgeändert sein. Im übrigen sind alle in der Beschreibung erwähnten und/oder in der Zeichnung dargestellten neuen Merkmale erfindungswesentlich, auch wenn sie in den Ansprüchen nicht ausdrücklich beansprucht sind.

### Bezugszeichenliste:

- 10: Felgenkörper
- 11: Bereifung
- 12: Nabe
- 13: Lagerkörper
- 14: Steg
- 15: Felge
- 16: Stirnfläche, an 11
- 17: Umfangsfläche, von 10
- 18: Vorsprung, an 17
- 19: Ausnehmung

## Patentansprüche

1. Laufrad, insbesondere für Rollen, das einen Felgenkörper aus spritzgußfähigem Kunststoff aufweist, auf den eine Bereifung aus thermoplastischem Elastomer aufgebracht ist,
**dadurch gekennzeichnet**,
daß als Werkstoff des Felgenkörpers (10) ein Polypropylen-Homopolymer und als Werkstoff der Bereifung (11) Styrol-Ethylen-Buthadien-Styrol (SEBS) eingesetzt ist.

2. Laufrad nach Anspruch 1, dadurch gekennzeichnet, daß die Verbindung zwischen dem Felgenkörper (10) und der Bereifung (11) im Einlegeverfahren hergestellt ist.

3. Laufrad nach Anspruch 1, dadurch gekennzeichnet, daß die Verbindung zwischen dem Felgenkörper (10) und der Bereifung (11) im 2-Komponenten-Spritzgußverfahren hergestellt ist.

4. Laufrad nach einem oder mehreren der vorhergehenden Ansprüche, dadurch gekennzeichnet, daß die Umfangsfläche (17) des Felgenkörpers (10) profiliert ausgebildet ist.

5. Laufrad nach Anspruch 4, dadurch gekennzeichnet, daß die Umfangsfläche (17) des Felgenkörpers (10) einen im Querschnitt schwalbenschwanzförmigen, umlaufenden Vorsprung (18) aufweist, dessen Randbereiche abwechselnd Ausnehmungen (19) aufweisen, die vom Bereifungswerkstoff ausgefüllt sind.
